# EUROPÄISCHE PATENTSCHRIFT

(11) **EP 1 240 441 B1**
(45) Veröffentlichungstag und Bekanntmachung des Hinweises auf die Patenterteilung: **18.08.2004**
(21) Anmeldenummer: 00983129.8
(22) Anmeldetag: 11.11.2000
(51) Int. Cl.: F16F 9/096

(54) **FEDER-DÄMPFERSYSTEM MIT SCHLAUCHROLLBALG**
SPRING-SHOCK ABSORBING SYSTEM WITH TUBULAR ROLLED BELLOWS
SYSTEME AMORTISSEUR A RESSORT COMPORTANT UN SOUFFLET TUBULAIRE

(30) Priorität: 21.12.1999 DE 19961719
(43) Veröffentlichungstag der Anmeldung: 18.09.2002
(73) Patentinhaber: DaimlerChrysler AG, 70567 Stuttgart (DE)
(72) Erfinder: ACKER, Bernd, 73733 Esslingen (DE); GÖNNHEIMER, Peter, 71384 Weinstadt (DE); KLANDER, Hans-Peter, 73732 Esslingen (DE); MELJNIKOV, Darko, 70771 Leinfelden-Echterdingen (DE); RÖMER, Matthias, 71155 Altdorf (DE); RÖSS, Karl-Heinz, 73061 Ebersbach (DE); RUTZ, Rüdiger, 73257 Köngen (DE); WINKLER, Martin, 71409 Schwaikheim (DE)
(86) Internationale Anmeldenummer: PCT/EP2000/011182
(87) Internationale Veröffentlichungsnummer: WO 2001/046602

(56) Entgegenhaltungen:
- DE-A- 19 715 580
- FR-A- 2 422 521
- US-A- 3 815 885
- US-A- 4 941 648

## Beschreibung

Die Erfindung betrifft ein kombiniertes Feder-Dämpfersystem zur Abstützung von Radaufhängungen oder Achsen an einem Fahrzeugaufbau mit einem zwischen einer radtragenden oder radführenden Anbindung und einer fahrzeugaufbauseitigen Anbindung angeordneten Schlauchrollbalg, der zwischen einer Außenglocke und einem Abrollkolben montiert ist und dessen Meniskus an einem zylindrischen Innenwandbereich der Außenglocke und einem zylindrischen Außenwandbereich des Abrollkolbens geführt ist.

Aus der DE 40 18 712 A1 ist ein Feder-Dämpfersystem mit einem derartig konstruierten Verdränger bekannt. Allerdings benötigt dieser Verdränger - bezogen auf einen Horizontalschnitt - einen sehr großen Bauraum.

Dies gilt auch für den Gegenstand der US 3,815,885. Hier haben zudem der Abrollkolben und die Außenglocke eine nichtzylindrische Form. Auch ist der Federhub im Verhältnis zum Durchmesser der Konstruktion relativ klein.

Ferner ist aus der DE 297 02 927 C1 ein Feder-Dämpfersystem bekannt, das aus einem Verdränger ohne Balg, einem Hydrospeicher und einer diese Teile verbindenden Hydraulikleitung besteht. In der Hydraulikleitung ist ein mechanisches Drosselventil angeordnet. Der verdränger verbindet, wie bei einem hydropneumatischen Federungssystem bekannt, die Fahrzeugradaufhängung mit dem Fahrzeugaufbau. Das System ist mit einer hydraulischen Flüssigkeit befüllt. Letztere wird beim Einfedern eines Fahrzeugrades durch das Drosselventil in einen Hydrospeicher verdrängt. Der Strömungswiderstand des Drosselventils erzeugt eine dämpfende Kraft, während die Kompression des Gasvolumens im Hydrospeicher eine federnde Kraft bewirkt. Bei dem hier vorgestellten Verdrängerprinzip taucht ein Verdrängerkolben in einen Verdrängerzylinder ein. Beide Teile bewegen sich in einer Führungs- und Dichtfuge reibungsbehaftet gegeneinander. Die Reibung beeinträchtigt die Ansprechzeit des Feder-Dämpfersystems, so daß sich bei einem Einsatz in einem Fahrzeug kein optimales Abrollverhalten der mit diesem System abgestützten Räder ergibt.

Der vorliegenden Erfindung liegt das Problem zugrunde, ein kombiniertes Feder-Dämpfersystem zu entwickeln, das einen auf einem Schlauchrollbalg basierenden, reibungsarmen Verdränger beinhaltet, der bei einer schlanken Bauweise eine über dem Fahrwerkshub unveränderliche wirksame Kolbenfläche hat.

Das Problem wird mit den Merkmalen des Hauptanspruchs gelöst. Dazu hat das Feder-Dämpfersystem einen zwischen einer radtragenden oder radführenden Anbindung und einer fahrzeugaufbauseitigen Anbindung angeordneten Schlauchrollbalg, der zwischen einer Außenglocke und einem Abrollkolben montiert ist und dessen Meniskus an einem zylindrischen Innenwandbereich der Außenglocke und einem zylindrischen Außenwandbereich des Abrollkolbens geführt ist. Der Balgraum ist mit einer Flüssigkeit gefüllt und kommuniziert mit einem fahrwerk- oder fahrzeugseitig gelagerten Hydrospeicher. Die Außenglocke oder der Abrollkolben ist entweder am Fahrzeugaufbau starr oder nachgiebig über elastische Zwischenelemente gelagert. Entweder der Abrollkolben oder die Außenglocke ist über ein Gelenk mit mindestens einem Schwenkfreiheitsgrad fahrwerkseitig gelagert. Ein derartiges System ist aus der US-A-3 815 885 bekannt. Die Erfindung zeichnet sich demgegenüber dadurch aus, daß Außenglocke und Abrollkolben zylindrisch said und der Außendurchmesser des Abrollkolbens gleich oder kleiner als der nutzbare Gesamthub des Federbeins ist.

Die Art des Verdrängerbalgs, die Art der Anbindung am Fahrwerk und am Fahrzeugaufbau und das Befüllen des Balgraumes mit einem über ein Gas vorgespanntes Fluid ermöglichen einen schlanken Verdränger ohne mechanische, reibungsbehaftete Längsführung. Eine separate Längsführung ist überflüssig, da der Druck im Verdrängerbalg die relativ zueinander bewegten Federbeinteile über den Balgmeniskus zentriert und stabilisiert.

Bei einem Be- oder Entlasten des Verdrängers strömt zwischen dem Verdränger und dem Hydrospeicher über eine Querschnittsverengung in Form einer hydraulischen Leitung oder eines Durchbruchs eine Hydraulikflüssigkeit hin und her. Die Gestaltung der Leitung bzw. des Durchbruchs und die Beschaffenheit der dort angeordneten Drosselstelle beeinflußt über die Größe und Form des Öffnungsquerschnittes die Systemdämpfung. Hierbei kann die Drosselstelle entweder als Düse oder Blende ausgebildet oder mindestens ein Drosselrückschlagventil sein. Bei der Verwendung von Drosselrückschlagventilen wird im Leitungs- bzw. im Durchbruchsquerschnitt pro Strömungsrichtung jeweils mindestens ein Ventil angeordnet.

Das Gaspolster des Hydrospeichers bildet maßgeblich die Systemfederung.

Durch das Verwenden eines Schlauchrollbalgs wird die mechanische Reibung des Gesamtsystems im wesentlichen auf die innere Reibung des Balg- und oder Membranmaterials reduziert. Dadurch zeigt das Feder-Dämpfersystem über den gesamten Feder- und Dämpferratenbereich ein nahezu ideales Ansprechverhalten.

Weitere Einzelheiten der Erfindung ergeben sich aus den Unteransprüchen und der nachfolgenden Beschreibung einer schematisch dargestellten Ausführungsform:

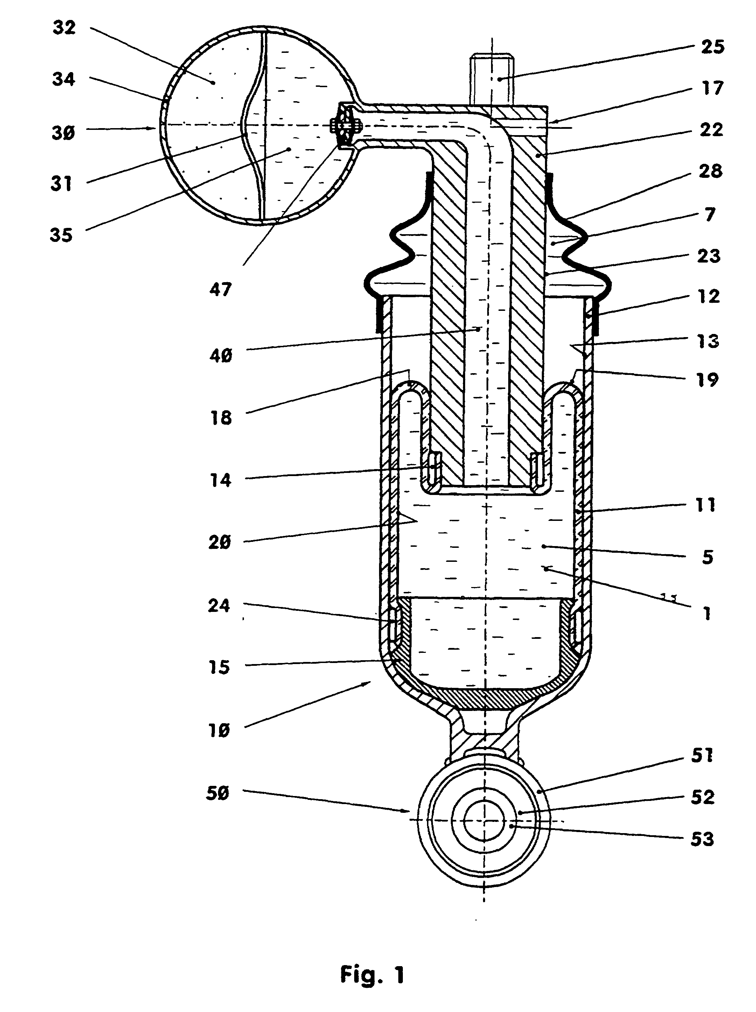

Figur 1: Feder-Dämpfersystem mit einem Schlauchrollbalg;

Die einzige Figur 1 zeigt ein kombiniertes Feder-Dämpfersystem, das einen Verdränger (10), einen Hydrospeicher (30) und eine zwischen diesen angeordnete flüssigkeitsführende Arbeitsleitung (40) mit einem integrierten Drosselventil (47) umfaßt.

Der Verdränger (10) besteht u.a. aus einer Außenglocke (12), einem Abrollkolben (22) und einem beide Teile verbindenden Schlauchrollbalg (11). Die Außenglocke (12) ist ein büchsenförmiger Hohlkörper, der aus einem Rohr mit einer zylindrischen Innenwand (13) und einem nach außen gewölbten Boden besteht.

Der Abrollkolben (22) ist ein Hohlkörper mit einer zylindrischen Außenwand (23), der beispielsweise an seinem freien, äußeren Ende das Gehäuse (34) des Hydrospeichers (30) trägt. Sein Hohlraum bildet eine Arbeitsleitung (40), die mit dem Fluidraum (35) des Hydrospeichers (30) kommuniziert. Im Ausführungsbeispiel befindet sich am oberen Ende des Abrollkolbens (22) beispielhaft ein Gewindebolzen (25) über den das Feder-Dämpfersystem am Fahrzeugaufbau starr oder nachgiebig über elastische Zwischenelemente befestigt werden kann.

Zwischen dem Abrollkolben (22) und der Außenglocke (12) ist der Schlauchrollbalg (11) befestigt. Dazu ist das obere Ende des an den Schlauchenden offenen Schlauchrollbalgs (11) mit der Innenwandung auf das untere Ende des Abrollkolbens (22) aufgeschoben und mit Hilfe eines Spannrings (14) z.B. kraftschlüssig rutschfest und abdichtend fixiert.

Das in Figur 1 untere Ende des Schlauchrollbalgs (11) ist auf einem annähernd zylindrischen Abschnitt einer Montagehilfskappe (15) befestigt. Hierzu ist das untere Ende des Schlauchrollbalgs (11) - vor dem Einbau in die Außenglocke (12) - mit der Innenwandung auf die Außenkontur der Montagehilfskappe (15) aufgeschoben und mittels eines Spannringes (24) z.B. kraft- und formschlüssig rutschfest und abdichtend fixiert. Nach dem Einsetzen der Montagehilfskappe (15) in die Außenglocke (12) liegt die Außenwandung des Balgs (11) zumindest in unmittelbarer Nähe zur Kappe an der Innenwand (13) an. Die Montagehilfskappe (15) kann in der Außenglocke (12) befestigt sein.

Im einbaufertigen Zustand des Feder-Dämpfersystems sitzt der Abrollkolben (22) so in der Außenglocke (12), daß das obere Ende des Schlauchrollbalgs (11) unter Ausbildung eines nach oben orientierten Meniskus (18) nach innen gestülpt ist. In der Folge rollt bei jeder betriebsbedingten Relativbewegung zwischen den Teilen (12) und (22) die Außenwandung (19) des Balgs (11) an der Außenwand (23) und der Innenwand (13) ab.

Der Meniskus (18) bewegt sich im gesamten Hubbereich zwischen den zylindrischen Wänden (13) und (23). Der mittlere radiale Abstand zwischen diesen Wänden ist im Hubbereich des Meniskus (19) konstant. Der Abstand entspricht einer Spaltbreite, die sich maximal aus der fünffachen Wandstärke des Schlauchrollbalgs (11) ergibt. Das ermöglicht eine schlanke Federbeinkonstruktion und hält die Belastung des Balgs (11) im Meniskusbereich gering. Zudem ist die innere Reibung im Schlauchrollbalg (11) über den gesamten Hub konstant.

Der Außendurchmesser des Abrollkolbens ist hierbei gleich oder kleiner als der nutzbare Gesamthub des Federbeins.

Die Länge des Schlauchrollbalgs entspricht beispielsweise dem zweifachen Balgdurchmesser.

Ggf. kann die Außenglocke im unteren Bereich, also in oder in der Nähe der Montagehilfskappe (15) verbreitert ausgeführt werden. In diesem Fall liegt eine solche Verbreiterung außerhalb des Meniskushubbereichs. Sie verhindert bei einem Einfedern eine größere Winkelabweichung zwischen der Mittellinie der Außenglocke (12) und der Mittellinie des Abrollkolbens (22), ohne daß die am Abrollkolben (22) anliegende Balgwandung (20) die an der Außenglocke (12) sich abstützende Balgwandung (20) berührt.

Der außerhalb des Balgraums (5) zwischen der Außenglocke (12) und dem Abrollkolben (22) liegende Rückraum (7) ist mit Hilfe eines Schmutzschutzbalges (28) gegen das Eindringen von Schmutz abgedichtet. Der Rückraum (7) ist über eine nicht dargestellte Entlüftungsbohrung mit der Umgebung verbunden.

Am unteren Ende der Außenglocke (12) ist ein Schwenkgelenk (50) angeordnet. Über das Schwenkgelenk (50) wird das Feder-Dämpfersystem am Fahrwerk gelenkig gelagert. Das Schwenkgelenk (50), dessen Schwenkachse senkrecht zur Mittellinie der Außenglocke verläuft, besteht aus zwei Buchsen (51) und (53) zwischen denen beispielsweise ein Elastomerkörper (52) einvulkanisiert oder eingeklebt ist. Der Elastomerkörper (52) kann die Gelenkigkeit des Gelenks (50) um bis zu fünf Freiheitsgrade erhöhen.

Die äußere Buchse (51) ist direkt am Außenkörper (12) angeschweißt. Die innere Buchse (53) dient im Ausführungsbeispiel der Befestigung am Fahrwerk.

Im oberen Bereich des Abrollkolbens (22) befindet sich eine ggf. sperrbare Zuleitung (17), die in die Arbeitsleitung (40) mündet. Über die Zuleitung (17) wird-bei einer Verwendung als aktives Feder-Dämpfersystem bzw. als Niveauregulierung - dem Verdränger Flüssigkeit zugeführt oder entnommen. Durch die Zu- und Abfuhr einer bestimmten Flüssigkeitsmenge können in gewünschter Weise Zusatzkräfte realisiert werden. Die Auf- oder Wegnahme dieser Zusatzmengen verändert im Gesamtsystem die Dämpferund die Federkräfte.

Der Hydrospeicher (30) ist beispielsweise als Blasen- oder Membranspeicher ausgebildet. Ein durch die Blase oder Membrane (31) abgeteiltes Gaspolster (32) bildet die Federung des Feder-Dämpfersystems. Am Übergang von der Arbeitsleitung (40) zum Gehäuse (34) des Hydrospeichers (30) befinden sich zwei einander entgegengesetzt wirkende Druckstufenventile in Form von Federplattenventilen. Jeweils ein Ventil (47) öffnet in eine andere Strömungsrichtung. Hierbei kann die Drosselwirkung des einzelnen Drosselrückschlagventils (47) ggf. mittels eines steuer- oder regelbaren Antriebs verstellbar ausgeführt werden.

In manchen Konstruktionen kann sich die Länge der Arbeitsleitung (40) auf einen Durchbruch verkürzen, z.B. wenn flüssigkeitsführende Bestandteile des Verdrängers in den Hydrospeicher hineinragen oder von diesem umgeben werden. Beispielsweise könnte die Außenglocke (12) von einem z.B. ringförmigen Gehäuse umgeben sein. In einem solchen Fall ist der zwischen diesem Gehäuse und der Außenkontur der Außenglocke liegende Gesamtringraum durch eine schlauchartige Membrane in einen inneren und äußeren Ringraum geteilt. Der äußere Ringraum ist mit Gas gefüllt, während der innere Ringraum, vergleichbar mit dem Fluidraum (35) aus Figur 1, mit dem Balgraum (5) über mindestens ein Drosselventil kommuniziert.

Das im Feder-Dämpfersystem verwendete Fluid (1) ist beispielsweise eine Lösung aus Wasser und Alkohol. Für diese Lösung eignen sich alle Alkohole, die bei Raumtemperatur in einem beliebigen Verhältnis mit Wasser mischbar sind. Beispielsweise wird eine Wasser-Äthanol-Lösung oder eine Wasser-Glykol-Lösung verwendet. Eine übliche Wasser-Glykol-Lösung, wie sie auch als frostgeschützte Kühlflüssigkeit in Verbrennungsmotoren verwendet wird, hat z.B. einen Ethylenglykolanteil von 33 bis 50%. Bei der fünfzigprozentigen Lösung ist ein Betrieb des Feder-Dämpfersystems bis zu einer Kälte von -35°Celsius möglich. Diese Lösung greift zudem die üblichen Elastomerwerkstoffe nicht an. Auch die Gummiquellung liegt in der Größenordnung der Quellung in reinem Wasser.

Alternativ zu der bisher beschriebenen Ausführungsform ist ein Feder-Dämpfersystem denkbar, bei dem das im System verwendete Fluid (1) eine magnetorheologische Flüssigkeit ist. Wird nun an der hydraulischen Arbeitsleitung (40) beispielsweise ein kurzer ringförmiger Abschnitt von einer stromerregten Magnetspule umschlossen, so stellt die erregte Magnetspule in Kombination mit dem Fluid (1) eine variable Drosselstelle dar. Mit einer zunehmenden Bestromung der Spule nimmt die Fließgeschwindigkeit durch eine Zunahme der scheinbaren bzw. dynamischen Viskosität in der Arbeitsleitung (40) ab, wodurch sich u.a. das Dämpfungsverhalten des Gesamtsystems gezielt verändern läßt.

## Patentansprüche

1. Kombiniertes Feder-Dämpfersystem zur Abstützung von Radaufhängungen oder Achsen an einem Fahrzeugaufbau
- mit einem zwischen einer radtragenden oder radführenden Anbindung und einer fahrzeugaufbauseitigen Anbindung angeordneten Schlauchrollbalg (11), der zwischen einer Außenglocke (12) und einem Abrollkolben (22) montiert ist und dessen Meniskus (18) an einem zylindrischen Innenwandbereich der Außenglocke (12) und einem zylindrischen Außenwandbereich des Abrollkolbens (22) geführt ist,
- wobei entweder die Außenglocke (12) oder der Abrollkolben (22) am Fahrzeugaufbau starr oder nachgiebig über elastische Zwischenelemente gelagert ist,
- wobei entweder der Abrollkolben (22) oder die Außenglocke (12) über ein Gelenk mit mindestens einem Schwenkfreiheitsgrad fahrwerkseitig gelagert ist,
- wobei der Balgraum (5) mit einem Fluid (1) befüllt ist und mit einem fahrwerk- oder fahrzeugseitig gelagerten Hydrospeicher (30) kommuniziert und
- wobei der Außendurchmesser des Abrollkolbens (22) gleich oder kleiner als der nutzbare Gesamthub des Federbeins ist.

2. Kombiniertes Feder-Dämpfersystem gemäß Anspruch 1, **dadurch gekennzeichnet, dass** die Spaltbreite zwischen der zylindrischen Außenwand (23) des Abrollkolbens (22) und der zylindrischen Innenwand (13) der Außenglocke (12) maximal dem Fünffachen der Wandstärke des abrollenden Schlauchabschnittes des Schlauchrollbalges (11) entspricht.

3. Kombiniertes Feder-Dämpfersystem gemäß Anspruch 1, **dadurch gekennzeichnet, dass** der Hydrospeicher (30) ein Membran- oder Blasenspeicher ist.

4. Kombiniertes Feder-Dämpfersystem gemäß Anspruch 1, **dadurch gekennzeichnet, dass** im Fluidstrom zwischen dem Balgraum (5) und dem Hydrospeicher (30) mindestens eine Drosselstelle oder mindestens zwei Drosselrückschlagventile (47) angeordnet sind.

5. Kombiniertes Feder-Dämpfersystem gemäß Anspruch 1, **dadurch gekennzeichnet, dass** das Drosselrückschlagventil (47) ein Druckstufenventil ist.

6. Kombiniertes Feder-Dämpfersystem gemäß Anspruch 1, **dadurch gekennzeichnet, dass** das Fluid (1) eine Wasser-Alkohollösung ist.

7. Kombiniertes Feder-Dämpfersystem gemäß Anspruch 1, **dadurch gekennzeichnet, dass** der Balgraum (5) über eine Zuleitung (17) im Fahrbetrieb zur Realisierung eines aktiven Feder-Dämpfersystems mit einer externen Fluidzuführung in Verbindung steht.

## Claims

1. A combined spring/damper system for supporting wheel suspension systems or axles on the bodywork of a motor vehicle
- having a tubular U-bellow (11) which is positioned between a wheel-bearing or wheel-locating connection and a connection on the bodywork of a motor vehicle and is mounted between the outer bell (12) and a roll-down piston (22) and which has a meniscus (18) which is guided on a cylindrical inner wall area of the outer bell (12) and a cylindrical outer wall area of the roll-down piston (22),
- either the outer bell (12) or the roll-down piston (22) is mounted rigidly or flexibly on the bodywork via an elastic intermediate element,
- either the roll-down piston (22) or the outer bell (12) is mounted on the bodywork via a joint with at least a degree of freedom from swivel,
- the bellow space (5) being filled with a fluid (1) and communicating with a hydraulic accumulator which is mounted either on the bodywork or on the motor vehicle and
- the outer diameter of the roll-down piston (22) being the same as or less than the useful total lift of the suspension strut.

2. A combined spring/damper system in accordance with claim 1, **characterised in that**
the width of the gap between the cylindrical outer wall (23) of the roll-down piston (22) and the cylindrical inner wall (13) of the outer bell (12) corresponds to a maximum of five times the wall thickness of the roll-down tubular section of the tubular U-bellow (11).

3. A combined spring/damper system in accordance with claim 1, **characterised in that**
the hydraulic accumulator (30) is a diaphragm accumulator or bladder accumulator.

4. A combined spring/damper system in accordance with claim 1, **characterised in that**
at least one flow control point or at least two one-way restrictors (47) are positioned in the fluid flow between the bellow space (5) and the hydraulic accumulator (30).

5. A combined spring/damper system in accordance with claim 1, **characterised in that**
the one-way restrictor (47) is a proportioning pressure release valve.

6. A combined spring/damper system in accordance with claim 1, **characterised in that**
the fluid (1) is a water/alcohol solution.

7. A combined spring/damper system in accordance with claim 1, **characterised in that**
when driving the bellow space (5) is connected via a supply line (17) to an external fluid supply in order to produce an active spring/damper system.

## Revendications

1. Système amortisseur combiné à ressort destiné à l'appui de suspensions de roues ou d'axes d'une caisse de véhicule,
- avec un soufflet tubulaire (11) disposé entre une fixation support de roue ou guidage de roue, d'une part, et une fixation côté caisse de véhicule, d'autre part, ledit soufflet étant monté entre une cloche extérieure (12) et un piston de déplacement (22), et dont le ménisque (18) épouse un secteur cylindrique de la paroi intérieure de la cloche extérieure (12) et un secteur cylindrique de la paroi extérieure du piston de déplacement (22),
- soit la cloche extérieure (12) soit le piston de déplacement (22) étant positionné sur la caisse du véhicule de manière rigide ou souple, par le biais d'éléments intermédiaires élastiques,
- soit la cloche extérieure (12) soit le piston de déplacement (22) étant positionné côté châssis par l'intermédiaire d'une articulation comportant un degré de liberté de positionnement au moins,
- l'espace du soufflet (5) étant rempli d'un fluide (1) et communiquant avec un accumulateur hydraulique (30) positionné côté châssis ou côté véhicule, et le diamètre extérieur du piston de déplacement (22) étant égal à la course utile totale de la jambe de suspension ou plus petit.

2. Système amortisseur combiné à ressort selon la revendication 1, **caractérisé en ce que** la largeur d'interstice entre la paroi extérieure cylindrique (23) du piston de déplacement (22) et la paroi intérieure cylindrique(13) de la cloche extérieure (12) correspond au maximum à cinq fois l'épaisseur de la paroi du secteur de déplacement du soufflet tubulaire (11).

3. Système amortisseur combiné à ressort selon la revendication 1, **caractérisé en ce que** l'accumulateur hydraulique (30) est constitué d'un accumulateur à membrane ou à vessie.

4. Système amortisseur combiné à ressort selon la revendication 1, **caractérisé en ce qu'**un point d'étranglement au moins ou deux soupapes de retenue et d'étranglement (47) au moins sont disposés dans le courant fluidique existant entre l'espace du soufflet (5) et l'accumulateur hydraulique (30).

5. Système amortisseur combiné à ressort selon la revendication 1, **caractérisé en ce que** la soupape de retenue et d'étranglement (47) est constitué d'une soupape à paliers de pression.

6. Système amortisseur combiné à ressort selon la revendication 1, **caractérisé en ce que** le fluide (1) est constitué d'une solution d'eau et d'alcool.

7. Système amortisseur combiné à ressort selon la revendication 1, **caractérisé en ce que** l'espace du soufflet (5) est raccordé en régime de roulement à une alimentation de fluide externe par l'intermédiaire d'une conduite d'amenée (17), en vue de réaliser un système actif amortisseur à ressort.
